# EUROPEAN PATENT SPECIFICATION

(11) **EP 1 723 024 B1**
(45) Date of publication and mention of the grant of the patent: **12.12.2007**
(21) Application number: 05704692.2
(22) Date of filing: 11.01.2005
(51) Int. Cl.: B62D 1/10

(54) **A STEERING WHEEL ARRANGEMENT**
LENKRADANORDNUNG
ENSEMBLE VOLANT DE DIRECTION

(30) Priority: 10.03.2004 GB 0405421
(43) Date of publication of application: 22.11.2006
(73) Proprietor: Autoliv Development AB, 44783 Vargarda (SE)
(72) Inventor: CHAPELAIN, Etienne, F-86440 Migne-Auxances (FR); CHEBRET, Romain, F-86170 Cisse (FR); GALMICHE, Fabrice, 86000 Poitiers (FR); GROLEAU, Laurent, F-86190 Latille (FR); BERTRAND, Olivier, F-16240 Courcôme (FR)
(74) Representative: Parry, Simon James
(86) International application number: PCT/SE2005/000018
(87) International publication number: WO 2005/085037

(56) References cited:
- EP-A1- 0 414 245
- EP-A1- 1 199 243
- DE-A1- 2 131 902

## Description

THE PRESENT INVENTION relates to a steering wheel arrangement.

It has been proposed previously to provide a steering wheel unit for use in a motor vehicle. The steering wheel is mounted to rotate relative to a fixed housing, the axis upon which the steering wheel rotates is offset from the axis of the steering column. The steering column carries a pinion gear. The steering wheel carries a ring gear which meshes with part of the pinion gear. As the steering wheel rotates, so the steering column is rotated.

In one embodiment of a steering wheel of this type, it is possible to mount a central air-bag unit, with the air-bag unit remaining stationary while the steering wheel rotates. This sort of arrangement enables the specially-shaped air-bag to be utilised and also facilitates the mounting of control buttons or the like on the upper surface of the air-bag unit.

A typical steering wheel arrangement incorporates a large number of parts, and there may be some cumulative tolerances when many parts are put together. This can be particularly bad in the above-mentioned type of steering wheel arrangement because there may be some "play" between the pinion on the steering column and the ring gear provided on the steering wheel. This gives the steering wheel an undesirable "feel" when the motor vehicle is being driven.

The present invention seeks to provide an improved steering wheel arrangement.

According to the present invention, there is provided a steering wheel arrangement, the steering wheel arrangement incorporating a fixed element, the fixed element carrying a first annular bearing, the annular bearing supporting a steering wheel for rotation relative to the fixed element, the fixed element also carrying a second bearing, the second bearing rotatably supporting a component to be connected to part of the steering column of a vehicle, the bearings each being retained, to the fixed element, by means of a first resilient retaining element, and the first bearing being retained to the steering wheel by a second resilient retaining element.

Preferably, the fixed element has a housing part with an upper surface, the upper surface having at least two levels, the outer periphery of the upper surface defining a wall, the first bearing being mounted to that wall, the upper surface defining an opening having a side wall, the second bearing being mounted to that side wall; wherein the first retaining element comprises a plate which lies over the upper surface, the plate having a part which is resiliently biased into contact with part of the first bearing and with part of the second bearing.

Advantageously, the plate has two arcuate sections located to either side of an aperture, one arcuate section being provided with retaining studs to secure the plate to the fixed element, the other arcuate section being resiliently connected to the first arcuate section and engaging both the first bearing and the second bearing.

Conveniently, the first arcuate section engages both the first bearing and the second bearing.

Preferably, the arcuate sections are interconnected by two relatively narrow interconnecting bridges.

Advantageously, the second retaining element is of annular form, the element carrying a plurality of radially inwardly directed resilient lugs which engage the first bearing on which the steering wheel is mounted, the second retaining element being secured to part of the steering wheel.

Conveniently, the second retaining element is provided with a plurality of fixing studs, the fixing studs passing through corresponding apertures formed in part of the steering wheel.

In order that the invention may be more readily understood, and so that further features thereof may be appreciated, an embodiment of the invention will now be described, by way of example, with reference to the accompanying drawings in which:
Fig. 1 is a perspective view of a steering wheel arrangement, parts of which are shown cut-away;

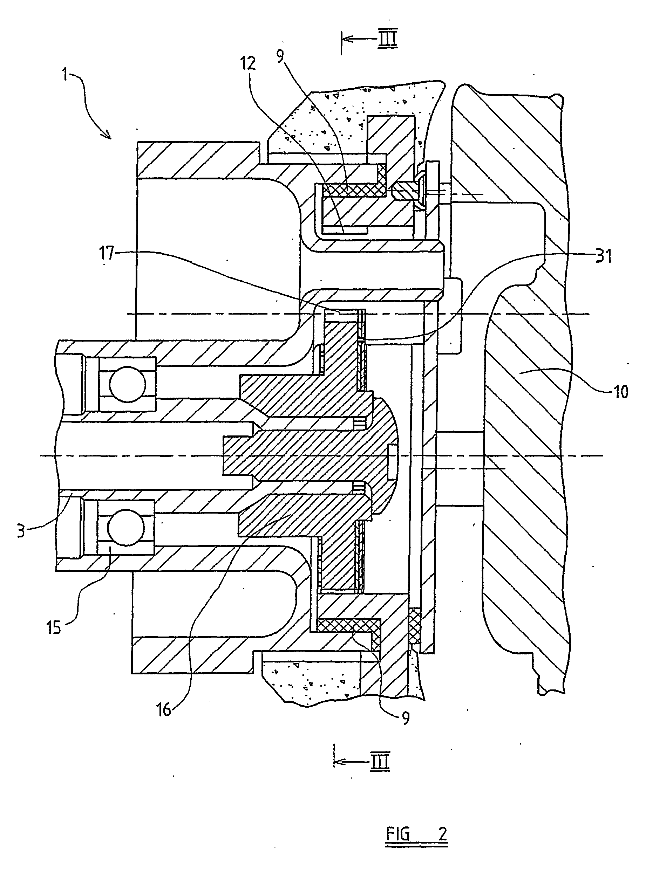

Fig. 2 is a sectional view illustrating part of the steering wheel mounting in more detail;

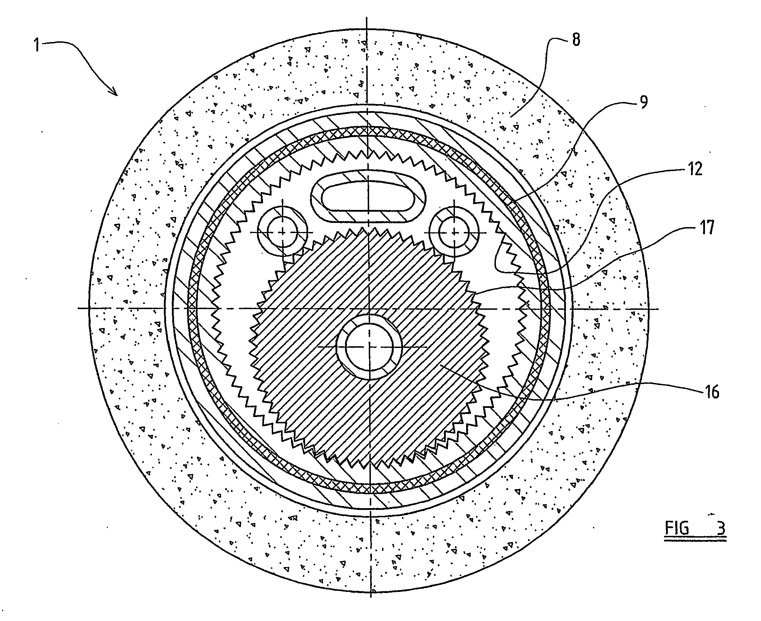

Fig. 3 is a further sectional view taking on the line III-III of Fig. 2;
Fig. 4 is a perspective view of a fixed element of a modified design;
Fig. 5 is a view of the element of Fig. 4 from the opposite side;
Fig. 6 is a sectional view of the fixed element;
Fig. 7 is a view of a retaining element;
Fig 8 is a further view of the retaining element of Fig. 7;
Fig. 9 is a view of a second retaining element; and
Fig. 10 is a further view of the second retaining element of Fig. 9.

A steering wheel assembly 1 is illustrated which incorporates a steering-wheel 2, mounted on a steering column 3. A fixed housing 4 is provided which is securely mounted in position.

The steering wheel 3 incorporates a metal frame 5 which defines spokes such as spokes 6, and a peripheral rim 7. The frame 5 is covered with an appropriate outer covering 8, for example, of a foam material.

The frame 5 is mounted by means of an annular bearing 9 on an appropriate formation provided on the housing 4. The steering wheel is to rotate about a predetermined axis. An air-bag unit 10 may be provided, which is connected directly to the fixed element 4. The air-bag unit 10 will thus not rotate on rotation of the steering wheel. The air-bag unit may be provided with a plurality of operating buttons 11 or the like, which will be fixed in position.

Part of the frame 5 adjacent to the annular bearing 9 defines an inwardly-facing gear 12.

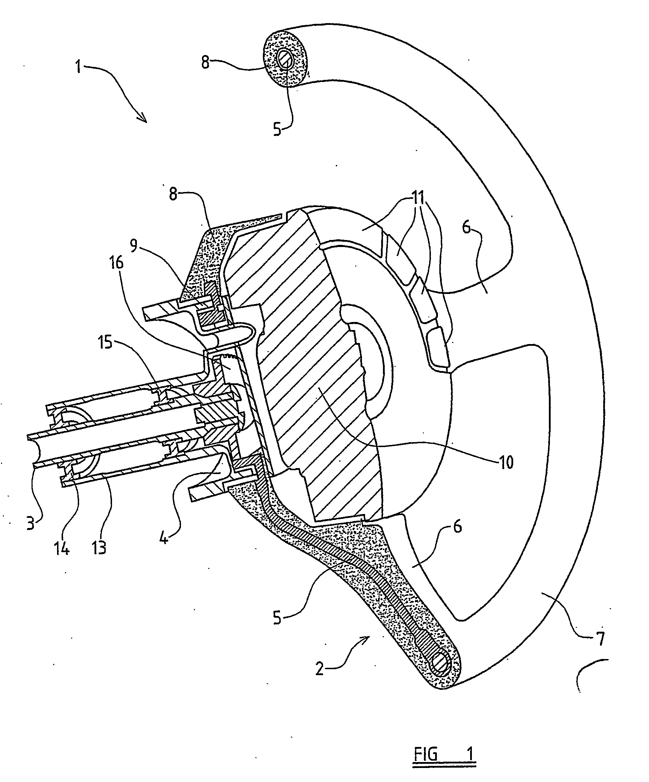

The steering column 3 is mounted within a tubular projection 13 which extends downwardly from the rest of the housing 4 by means of two spaced-apart bearings 14, 15 (see Fig. 1). The uppermost end of the steering column, carries a pinion 16, the pinion having a toothed periphery 17 which engages with the ring gear 12 provided on the steering wheel frame.

It will be understood that on rotation of the steering wheel, the pinion 16 will rotate, thus rotating the steering column. A steering wheel assembly of this general type has been proposed before, and is described in EP-A-1199243.

It is to be observed that in the prior proposed arrangement described above, the bearings 14,15 between the fixed housing 4 and the steering column 3 are offset from the bearing 9 between the fixed housing 4 and the steering wheel frame. This offset of bearings can provide some degree of "play" which is undesirable. It has been proposed, therefore, to provide an arrangement in which the bearings are coplanar or substantially coplanar in their relative positioning. However, if an arrangement of this type is utilised it may be found difficult to mount the bearings in position.

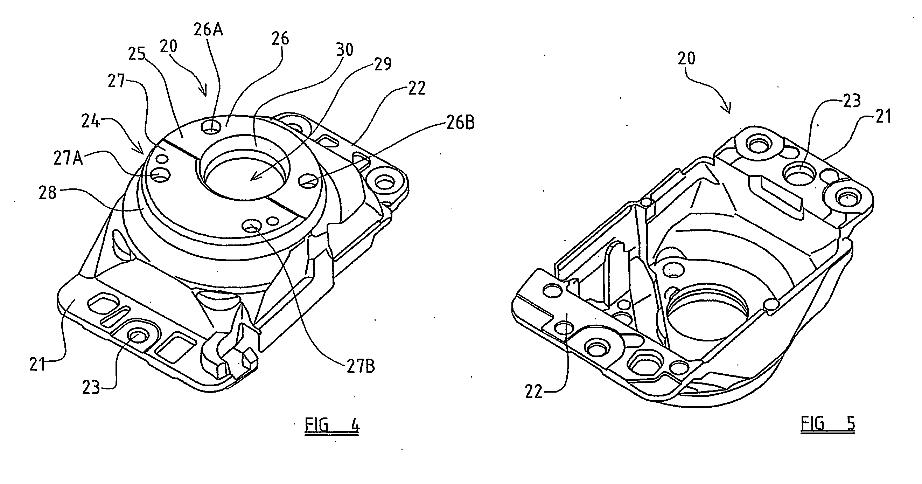

However, referring now to Figs 4 to 6, which illustrate a fixed element for mounting a steering wheel, which embodies the invention, an arrangement has been devised in which the bearings are coplanar, but yet the bearings can readily be mounted in position.

Referring initially to Figs. 4 and 5, a fixed element 20 is provided. The fixed element 20 has a rectangular base presenting two oppositely directed mounting flanges 21, 22. Each mounting flange is provided with appropriate mounting apertures 23, to enable the fixed element 20 to be readily fixed in position. The mounting flanges 21,22 support an upwardly directed hollow housing 24. The housing 24, because of its intended location, has a relatively complex external form, but the form of the housing is not relevant to the present invention. The upper part of the housing 24 presents an upper surface 25. The upper surface 25 is divided into two arcuate regions 26, 27 each of substantially semicircular extent and which are each at different levels. The upper surface 25 thus has a substantially circular exterior side wall 28. As will become clear from the following description, the side wall 28 engages part of a bearing.

The arcuate region 26, which is the higher of the two, is provided with two apertures 26A, 26B, and the arcuate region 27 is provided with two similar apertures 27A, 27B.

A circular opening 29 is formed in the upper surface 25 of the housing, the opening 29 having an inwardly directed annular side wall 30. The wall 30, as will become clear in the following description, forms a seat for another bearing.

The opening 29 is offset from the centre of the circular upper surface 25.

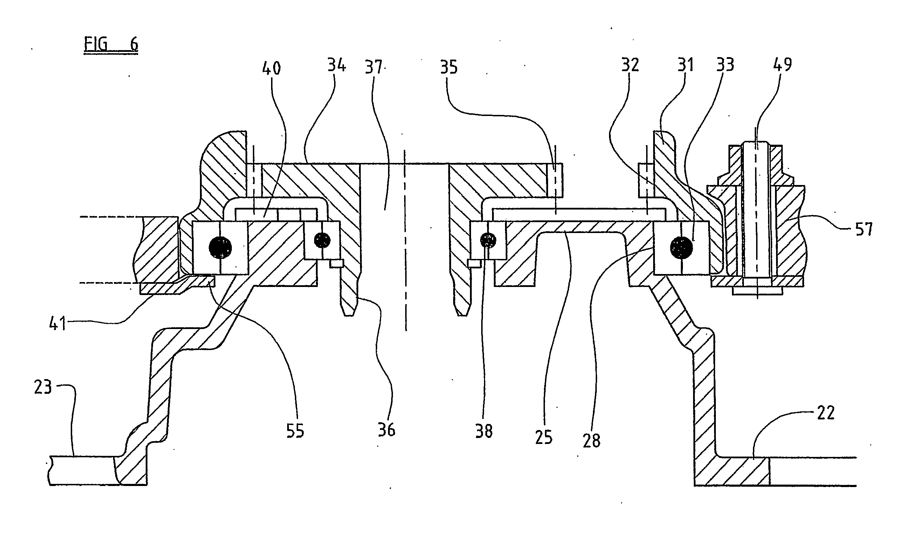

Turning now to Fig. 6, part 31 of a steering wheel frame is illustrated. The part 31 is of annular form and defines, on its inner face, an annular ring gear 32. Beneath the ring gear 32 the annular part of the steering wheel frame 31 is supported on an annular ring bearing 33. The annular ring bearing 33 is mounted on the outer side wall 28 of the upper surface 25 of the housing.

A pinion 34 is provided. The pinion 34 has a toothed exterior 35. The toothed exterior of the pinion 34 engages the toothed ring gear 32 provided on the annular part 31 of the steering wheel frame. The pinion 34 is provided with a hollow mounting shaft 36 the interior of which is splined 37. The pinion is mounted by means of an annular ring bearing 38, the ring bearing 38 engaging the exterior of the mounting shaft 36 and also being received within the opening 29. The ring bearing thus engages the side wall 30 of the opening 29.

It is to be noted, therefore, that a ring bearing 33 is mounted on the exterior wall 28 of the upper part 25 of the housing 24, and a further ring bearing 38 is accommodated within the opening 29.

A securing plate 40 is provided which extends over the bearings to retain the bearings in position. Of course, a further engagement will be provided on the steering wheel frame to engage the bearing 33, but this is not shown for the sake of simplicity of illustration.

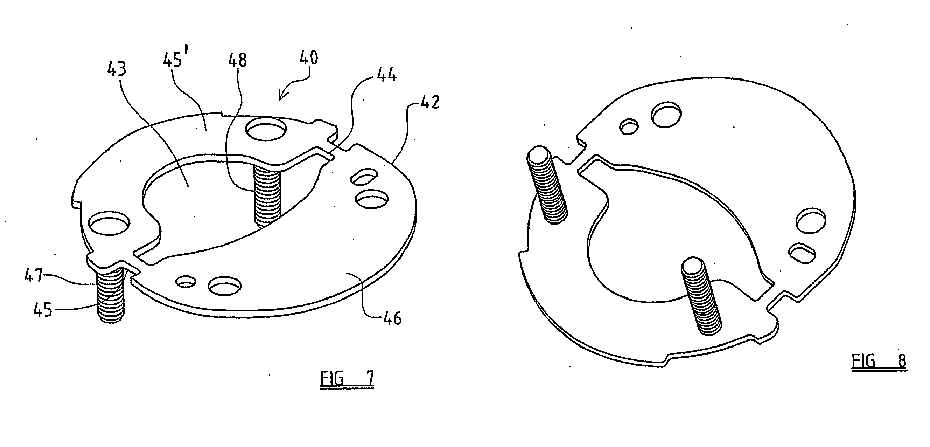

A further retaining element 41 is provided which serves to retain the bearing 33. The retaining elements 40, 41 are described in more detail below with reference to Figs. 7 to 10.

Retaining element 40, as shown in Fig. 7, comprises an element formed from a circular plate 42. A relatively large aperture 43 is provided in the plate, slightly offset from the centre. The aperture 43 is configured to lie adjacent the opening 29 formed in the housing 24 and thus has a similar overall size to the opening 29. Parts of the aperture 43, however, approach the periphery of the plate, and serve to leave only two narrow necks 44, 45, the necks 44, 45 thus effectively serving to join together two arcuate areas 45¹, 46 of the plate. The arcuate area 45¹ is located to one side of the central aperture 43 and carries two depending mounting studs 47, 48. The other arcuate part 46 is crescent shaped, and lies to the other side of the aperture 43.

The narrow necks 44, 45 have resilient properties, and thus the arcuate region 46 may move resiliently relative to the arcuate region 45¹.

It is to be appreciated that the two mounting studs 47, 48 pass through the apertures 26A, 26B in the area 26 of the upper surface 25 on the housing 24 which is the higher of the two upper surfaces in the orientation shown in Fig. 4. Part of the arcuate region 45¹ will thus overlie the periphery of the opening 29, serving to lie over the bearing 38 when it has been located within the opening 29. That part of the plate may be drawn tightly into engagement with the bearing.

The crescent shaped arcuate part 46 of the plate 40, which overlies the region 27 of the upper surface 25 which is the lower of the two regions, will be biased downwardly towards that region, to resiliently engage the region and the part of the crescent shaped area 46 which bounds the aperture 43 will thus overlie a further part of the bearing 38 which is located in the opening 29 formed in the upper part of the housing 24. This part will resiliently engage the bearing and help ensure that the bearing is maintained in position within the opening 29 in a "rattle-free" manner.

The outermost part of the arcuate portion 45, that is to say the radially outermost part, will overlie part of the bearing 33 which supports the steering wheel frame, at a point where the opening 29 is located adjacent the peripheral side wall 28 formed at the upper part of the housing 24. Thus, this will help maintain the bearing 33 in position. Similarly, a peripherally outermost part of the crescent shaped arcuate region 46 will also overlie part of the bearing 33, but will be resiliently biased into contact with the bearing 33, thus helping maintain the bearing in position in a rattle-free manner.

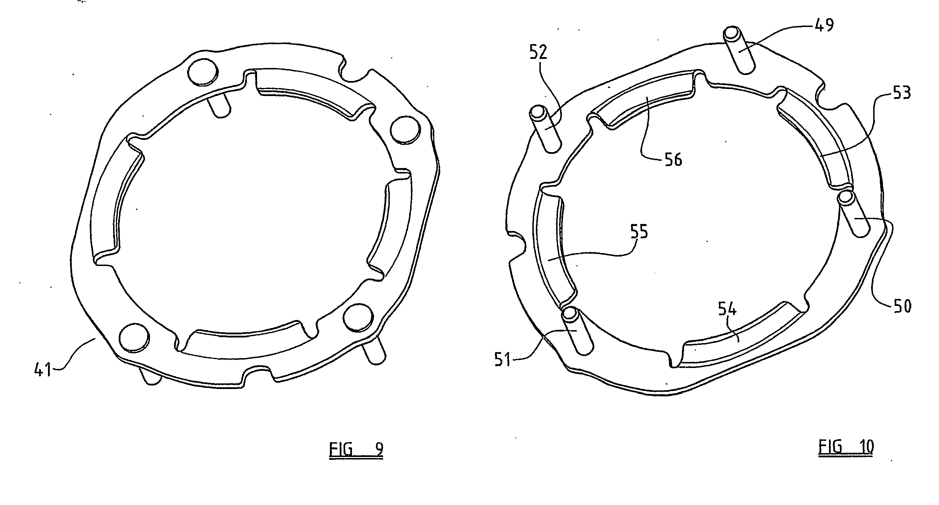

The second retaining element 41 is shown in Figs. 9 and 10. The retaining element 41 is of annular form, being formed of a plate-like material and having four substantially equi-angularly spaced retaining studs 49, 50, 51, 52. At positions between the studs there are resiliently yieldable inwardly directed tabs 53, 54, 55, 56. The tabs are deflected from the plane of the annular plate in the same direction as the direction of the studs.

The retaining element 41 is mounted in position with the yieldable tabs 53, 54, 55, 56 engaging the under-surface of the steering wheel bearing 33, the retaining studs, such as stud 49 passing through appropriate apertures formed in a region of the steering wheel frame 57 that surrounds the annular part 31 that carries the ring gear 32 (see Fig. 6).

As can be seen, the resilient tabs, such as tab 55 shown to the left-hand side of Fig. 6, resiliently engage the bearing 33 to hold the bearing in position in a rattle-free manner.

When used in this specification and claims, the terms "comprises" and "comprising" and variations thereof mean that the specified features, steps or integers are included. The terms are not to be interpreted to exclude the presence of other features, steps or components.

## Claims

1. A steering wheel arrangement, the steering wheel arrangement incorporating a fixed element (20), the fixed element carrying a first annular bearing (33), the annular bearing supporting a steering wheel (22) for rotation relative to the fixed element, the fixed element also carrying a second bearing (38), the second bearing rotatably supporting a component to be connected to part of the steering column of a vehicle, **characterised in that** the bearings are both retained, to the fixed element, by means of a first resilient retaining element (40), the first bearing being retained to the steering wheel by a second resilient retaining element (41).

2. An arrangement according to Claim 1 wherein the fixed element (20) has a housing part (24) with an upper surface (25), the upper surface (25) having at least two levels (26,27), the outer periphery of the upper surface defining a wall (28), the first bearing (33) being mounted to that wall, the upper surface defining an opening (29) having a side wall (30), the second bearing (38) being mounted to that side wall; wherein the first retaining element (40) comprises a plate which lies over the upper surface, the plate having a part (46) which is resiliently biased into contact with part of the first bearing and with part of the second bearing.

3. An arrangement according to Claim 2 wherein the plate has two arcuate sections (45,46) located to either side of an aperture (43), one arcuate section (45¹)being provided with retaining studs (48) to secure the plate to the fixed element, the other arcuate section (46) being resiliently connected to the first arcuate section and engaging both the first bearing (33) and the second bearing (38).

4. An arrangement according to Claim 3 wherein the first arcuate section (45¹) engages both the first bearing (33) and the second bearing (38).

5. An arrangement according to Claim 3 or 4 wherein the arcuate sections (45¹,46) are interconnected by two relatively narrow interconnecting bridges (44,45).

6. An arrangement according to any preceding Claim wherein the second retaining element (41) is of annular form, the element carrying a plurality of radially inwardly directed resilient lugs (53-56) which engage the first bearing (33) on which the steering wheel is mounted, the second retaining element being secured to part of the steering wheel (2).

7. An arrangement according to Claim 6 wherein the second retaining (41) element is provided with a plurality of fixing studs (59-52), the fixing studs passing through corresponding apertures formed in part of the steering wheel (2).

## Patentansprüche

1. Lenkradanordnung, wobei die Lenkradanordnung ein festes Element (20) enthält, wobei das feste Element ein erstes ringförmiges Lager (33) trägt, wobei das ringförmige Lager ein Lenkrad (22) zur Drehung in Bezug auf das feste Element stützt, wobei das feste Element auch ein zweites Lager (38) trägt, wobei das zweite Lager einen Bestandteil, der mit einem Teil der Lenksäule eines Fahrzeugs verbunden werden soll, stützt, **dadurch gekennzeichnet, dass** die Lager beide durch ein erstes elastisches Halteelement (40) am festen Element gehalten werden, und das erste Lager durch ein zweites elastisches Halteelement (41) am Lenkrad gehalten wird.

2. Anordnung nach Anspruch 1, wobei das feste Element (20) einen Gehäuseteil (24) mit einer oberen Fläche (25) aufweist, wobei die obere Fläche (25) zumindest zwei Ebenen (26, 27) aufweist, wobei der äußere Umfang der oberen Fläche eine Wand (28) definiert, wobei das erste Lager (33) an dieser Wand angebracht ist, wobei die obere Fläche eine Öffnung (29) mit einer Seitenwand (30) definiert, wobei das zweite Lager (38) an dieser Seitenwand angebracht ist; wobei das erste Halteelement (40) eine Platte umfasst, die über der oberen Fläche liegt, wobei die Platte einen Teil (46) aufweist, der elastisch in einen Kontakt mit einem Teil des ersten Lagers und mit einem Teil des zweiten Lagers vorgespannt ist.

3. Anordnung nach Anspruch 2, wobei die Platte zwei bogenförmige Abschnitte (45, 46) aufweist, die sich an beiden Seiten einer Öffnung (43) befinden, wobei ein bogenförmiger Abschnitt (45¹) mit Haltegewindebolzen (48) versehen ist, um die Platte am festen Element zu befestigen, und der andere bogenförmige Abschnitt (46) elastisch mit dem ersten bogenförmigen Abschnitt verbunden ist und sowohl mit dem ersten Lager (33) als auch mit dem zweiten Lager (38) eingreift.

4. Anordnung nach Anspruch 3, wobei der erste bogenförmige Abschnitt (45¹) sowohl mit dem ersten Lager (33) als auch mit dem zweiten Lager (38) eingreift.

5. Anordnung nach Anspruch 3 oder 4, wobei die bogenförmigen Abschnitte (45¹, 46) durch zwei verhältnismäßig schmale Verbindungsbrücken (44, 45) verbunden sind.

6. Anordnung nach einem vorhergehenden Anspruch, wobei das zweite Halteelement (41) eine ringförmige Form aufweist, wobei das Element mehrere radial einwärts gerichtete elastische Ansätze (53 bis 56) trägt, die mit dem ersten Lager (33), an dem das Lenkrad angebracht ist, eingreifen, wobei das zweite Halteelement an einem Teil des Lenkrads (2) befestigt ist.

7. Anordnung nach Anspruch 6, wobei das zweite Halteelement (41) mit mehreren Fixierungsstiften (59 bis 52) versehen ist, wobei die Fixierungsstifte durch entsprechende Öffnungen verlaufen, die in einem Teil des Lenkrads (2) gebildet sind.

## Revendications

1. Agencement de volant de direction, l'agencement de volant de direction incorporant un élément fixe (20), l'élément fixe supportant un premier palier annulaire (33), le palier annulaire supportant un volant de direction (22) pour une rotation par rapport à l'élément fixe, l'élément fixe supportant également un second palier (38), le second palier supportant de façon rotative un composant destiné à être relié à une partie de la colonne de direction d'un véhicule, **caractérisé en ce que** les paliers sont tous les deux retenus, sur l'élément fixe, au moyen d'un premier élément de retenue résilient (40), le premier palier étant retenu sur le volant de direction par un second élément de retenue résilient (41).

2. Agencement selon la revendication 1, dans lequel l'élément fixe (20) comporte une partie de logement (24) avec une surface supérieure (25), la surface supérieure (25) possédant au moins deux niveaux (26, 27), la périphérie extérieure de la surface supérieure définissant une paroi (28), le premier palier (33) étant monté sur cette paroi, la surface supérieure définissant une ouverture (29) possédant une paroi latérale (30), le second palier (38) étant monté sur cette paroi latérale ; dans lequel le premier élément de retenue (40) comprend une plaque qui se trouve sur la surface supérieure, la plaque possédant une partie (46) qui est sollicitée de façon résiliente en contact avec une partie du premier palier et avec une partie du second palier.

3. Agencement selon la revendication 2, dans lequel la plaque comporte deux sections arquées (45, 46) positionnées de chaque côté d' une ouverture (43), une section arquée (45¹) étant pourvue de tenons de retenue (48) pour fixer la plaque à l'élément fixe, l'autre section arquée (46) étant reliée de façon résiliente à la première section arquée et entrant en prise avec le premier palier (33) et avec le second palier (38) .

4. Agencement selon la revendication 3, dans lequel la première section arquée (45¹) entre en prise avec le premier palier (33) et avec le second palier (38).

5. Agencement selon la revendication 3 ou 4, dans lequel les sections arquées (45¹, 46) sont interconnectées par deux ponts d'interconnexion relativement étroits (44, 45).

6. Agencement selon l'une quelconque des revendications précédentes, dans lequel le second élément de retenue (41) possède une forme annulaire, l'élément supportant une pluralité de pattes résilientes dirigées vers l'intérieur de façon radiale (53 à 56) qui entrent en prise avec le premier palier (33) sur lequel est monté le volant de direction, le second élément de retenue étant fixé à une partie du volant de direction (2).

7. Agencement selon la revendication 6, dans lequel le second élément de retenue (41) est pourvu d'une pluralité de tenons de fixation (59 à 52), les tenons de fixation passant à travers des ouvertures correspondantes formées dans une partie du volant de direction (2).
